# EUROPÄISCHE PATENTSCHRIFT

(11) **EP 1 180 503 B1**
(45) Veröffentlichungstag und Bekanntmachung des Hinweises auf die Patenterteilung: **28.09.2005**
(21) Anmeldenummer: 01250284.5
(22) Anmeldetag: 27.07.2001
(51) Int. Cl.: C04B 14/24, C04B 38/00, C03C 11/00

(54) **Verfahren zur Herstellung von porösem silikatischem Granulat**
Process for the production of a porous silicate granulate
Procédé pour la préparation d'un granulé silicate poreux

(30) Priorität: 16.08.2000 DE 10042071
(43) Veröffentlichungstag der Anmeldung: 20.02.2002
(73) Patentinhaber: Mattig & Lindner GmbH, 03149 Forst (Lausitz) (DE)
(72) Erfinder: Schelinski, Siegfried Dr. rer. nat., 02943 Weisswasser (DE)
(74) Vertreter: Meyer, Hans-Joachim

(56) Entgegenhaltungen:
- DE-A- 1 496 669
- DE-A- 1 496 684
- DE-A- 1 905 340
- DE-A- 2 335 146
- DE-A- 3 522 291
- DE-A- 19 836 869
- FR-A- 1 592 183
- GB-A- 1 002 786
- GB-A- 1 287 687
- US-A- 3 443 920
- US-A- 3 990 901
- US-A- 4 552 577

## Beschreibung

Die Erfindung betrifft ein Verfahren zur Herstellung eines porösen silikatischen Granulats gemäß dem Oberbegriff des Anspruchs 1.

Körnige oder als Granulate vorliegende poröse silikatische Baustoffmaterialien werden als Zuschläge für die Herstellung von Leichtbeton und Leichtmörteln eingesetzt. Bei der Herstellung gefügedichter und haufwerksporiger Leichtbetone spielen diese Zuschläge mit ihren Korneigenfestigkeiten und Kornrohdichten eine besondere Rolle. Nach dem Stand der Technik lassen sich Korneigenfestigkeiten und Kornrohdichten derzeit nur in bestimmten Bereichen variieren. Für Blähglasgranulate der Korngruppe 4/8 mm beispielsweise liegt die Kornfestigkeit in Anlehnung an DIN 4226, Teil 3, bei etwa 0,8 N/mm² bei Kornrohdichten von 250 bis 350 kg/m³. Entsprechende Wertepaare für Blähtone sind: etwa 1,5 N/mm² - 550 bis 650 kg/m³, etwa 3,5 N/mm² - 700 bis 800 kg/m³ sowie etwa 5,3 N/mm² - 900 bis 1000 kg/m³.

Aus der DE 43 42 996 C2 ist ein Verfahren zur Herstellung von als Leichtzuschlag dienendem Schaumglasgranulat aus gemahlenem Glas, Bindemittel und Blähmittel bekannt. Bei diesem Verfahren werden Recyclingglas und Zusatzkomponenten zu einer Zielzusammensetzung mit (in Masse-%) 68,5-75 % SiO₂, 10- < 14 Na₂O, bis 2,5 % K₂O, 1,8-3 % Al₂O₃, > 6-11 % CaO, 0,5-4 % MgO, bis 0,5 % Fe₂O₃, bis 0,4 % SO₃, bis 1 % TiO₂, 0,5-3 % BaO und bis 0,5 % sonstige Komponenten gemischt, wobei der Alkalioxidgehalt weniger als 15 Masse-% beträgt. Diese Mischung wird vermahlen sowie anschließend mit dem Bindemittel und dem Blähmittel innig vermischt. Die Mischung wird dann mittels Preßwalzen mit Preßdrücken von > 100 bis 200 MPa zu Preßlingen geformt, und die Preßlinge werden schließlich zu Rohgranulat zerkleinert und in einem Wärmebehandlungsverfahren mit gesteuertem Temperaturregime geschäumt.

Ferner ist in der DE 198 36 869 A1 ein Verfahren zur Herstellung von Vorprodukten für Glasprodukte, glasähnliche oder Anteile an Glas oder Glasphase enthaltender Materialien, insbesondere von Leichtzuschlagstoff für die Herstellung von Leichtbeton, beschrieben, wobei ein Gemisch aus Alkalisilikaten und Erdalkalisilikaten oder Alkalisilikaten, Erdalkalisilikaten und komplexen Alkali-Erdalkali-Silikaten sowie den entsprechenden Hydrogensilikaten bzw. Silikathydraten und Quarz verwendet wird. Dieses Verfahren ist im wesentlichen dadurch gekennzeichnet, daß Alkalihydroxide und Erdalkalioxide und -hydroxide mit Quarzmehl, feinkörnigem Siliziumdioxid oder SiO₂-reichen feinkörnigen Stoffen mit Lösewasser oder unter Wasserzusatz und gegebenenfalls unter Zusatz weiterer Roh- oder Ausgangsstoffe, insbesondere von Glasmehl, bei Temperaturen zwischen Umgebungstemperatur und 150°C gemischt und als Mischung bei Temperaturen zwischen 80°C und 200°C einer mit einer Silikat- und Hydrogensilikatbildung einhergehenden Wärmebehandlung, Agglomerierung und Trocknung unterzogen werden. Ferner werden in der DE 198 36 869 A1 Gemische aus Feinquarzsand und Zement als Trennmittel für ein Granulat bei einer Schmelzsinterung und einem Blähprozeß in einem Drehrohrofen bei Temperaturen von 850°C bis 900°C beschrieben.

Die DE 197 02 560 A1 offenbart ein Verfahren zur Verwertung von Bildröhrenaltglas. Bei diesem Verfahren wird zur Herstellung von Schaumglasgranulat erst ein Rohgranulat durch Zugabe eines geeigneten Trennmittels, wie Kalk, Zement oder Quarzmehl, so konfektioniert, daß beim späteren Bläh- und Sinterprozeß die einzelnen Körner nicht zusammenkleben. Die Möglichkeiten für den Einsatz von Zement werden damit jedoch nicht ausgeschöpft.

Der Einfluß der Atmosphäre bei der Herstellung der Rohgranulate und bei den Schmelzsinter- und Blähvorgängen wird in den Druckschriften DE 43 42 996 C2, DE 197 02 560 A1 und DE 198 36 869 A1 nicht berücksichtigt. Daher werden auch diesbezügliche Steuerungsmöglichkeiten nicht in Betracht gezogen.

Der Erfindung liegt die Aufgabe zugrunde, Zuschläge als poröse silikatische Granulate mit dichter Oberfläche und einem breiten Spektrum der Kornrohdichte bei hoher Korneigenfestigkeit zur Verfügung zu stellen, die gestatten, die bezüglich Festigkeit, Rohdichte und Bauphysik geforderten Leichtbetonqualitäten in einem weiten Bereich einzustellen. Der Erfindung liegt somit insbesondere die Aufgabe zugrunde, ein Verfahren zur Herstellung eines Granulats der eingangs genannten Art anzugeben.

Diese Aufgabe wird durch das in Anspruch 1 definierte Verfahren gelöst. Das erfindungsgemäße Verfahren ist im wesentlichen dadurch gekennzeichnet, daß
- eine Mischung aus
   a) Glasmehl,
   b) Quarzmehl und/oder einem anderen im wesentlichen reinen feinkörnigen SiO₂-Träger,
   c) einem Tonmehl und/oder Tonmineralmehl,
   d) Portlandzement,
   e) Natronlauge,
   f) einem Blähmittel und
   g) Wasser
      sowie gegebenenfalls weiteren Zusatz- und/oder Hilfsstoffen hergestellt wird,
- die Mischung bei einer erhöhten Temperatur im Bereich von 20°C bis 150°C bei Normaldruck unter Einstellung oder zeitlich-temperatur-abhängiger Steuerung des Wasserdampfpartialdruckes und entweder unter Ausschluß von Kohlendioxid oder unter gegenüber der Umgebungsluft herabgesetztem Kohlendioxidpartialdruck wärmebehandelt und agglomeriert wird, wobei bei gegenüber der Umgebungsluft herabgesetztem Kohlendioxidpartialdruck der Zutritt von Kohlendioxid durch Einstellung oder Wahl des Kohlendioxidpartialdruckes gesteuert wird,
- das Zwischenprodukt gegebenenfalls zerkleinert und klassiert wird,
- das so erhaltene Zwischenprodukt bei Normaldruck und unter Einstellung, Wahl oder zeitlich-temperatur-abhängiger Steuerung des Kohlendioxidpartialdruckes und/oder des Wasserdampfpartialdruckes auf eine Temperatur von 700°C bis 1250°C aufgeheizt und bei dieser Temperatur gesintert und gebläht wird.

Die Zeitdauer des Sinter- und Blähvorgangs beträgt in der Regel zwischen 5 Minuten und 30 Minuten.

Der Anteil an Glas liegt in seiner chemischen Zusammensetzung im Bereich üblicher Zusammensetzungen technischer Massengläser, hauptsächlich der Alkali-Erdalkali-Silikatgläser. Der glasigkristalline Anteil liegt auf die Masse bezogen vorzugsweise im Zusammensetzungsbereich SiO₂ 45% bis 85%, Alkalioxide (R₂O) 5% bis 20%, Erdalkalioxide (RO) 5% bis 30%, andere Oxide (wie Al₂O₃, Fe₂O₃) 2% bis 30%.

Eine bevorzugte Ausgestaltung des erfindungsgemäßen Verfahrens besteht darin, daß Glasmehle, Glasmehlgemische und/oder Glasmehle aus verunreinigten Abfällen technischer Massengläser und Quarzmehle oder auch andere praktisch reine feinkörnige SiO₂-Träger mit Körnungen < 40 µm eingesetzt werden.

Für das Verfahren wird der aus Zusatz- und Hilfsstoffen stammende Masseanteil am Endprodukt auf maximal 20 Masse-% eingestellt. Dabei werden in der Gruppe der Zusatz- und Hilfsstoffe neben Blähmitteln und Wasser einzeln oder kombiniert Wasserglaslösungen, Filterstäube, Schlackenmehle, Keramikmehle, Branntkalk, Kalkhydrat, Kalksteinmehl, Gips, Anhydrit, Korundmehl, Tonerdehydrat, andere Oxide, Hydroxide, Karbonate und Sulfate der Alkalien und Erdalkalien und weitere silikatische, oxidische, hydroxidische, karbonatische oder sulfatische Materialien eingesetzt.

Als Blähmittel werden vorzugsweise Kohlenstoff oder Kohlenstoffträger wie Ruß, Graphitmehl, Steinkohlenmehl, feinkörniges Siliziumkarbid und Kohlenhydrate eingesetzt. Handelsüblicher Zucker ist als Kohlenhydrat gut geeignet. Erfindungsgemäß werden einerseits die Wirkung dieser Blähmittel und andererseits und damit verknüpft Reaktionen und Schmelzsintervorgänge der oxidischen Bestandteile in den als Zwischenprodukt vorliegenden Agglomeraten beim Aufheizen auf die Sinter- und Blähtemperatur und beim Sintern und Blähen selbst durch Einstellung, Wahl oder zeitlich-temperatur-abhängige Vorgabe des Kohlendioxid- und des Wasserdampfpartialdruckes gesteuert. Für die Steuerung der Blähvorgänge werden dabei das Boudouard-Gleichgewicht und die Wassergasreaktion genutzt, mit denen in andere Redox-Vorgänge, wie beispielsweise mit den durch Glasmehle und Portlandzement eingebrachten sulfatischen Bestandteilen, eingegriffen wird.

Für die Herstellung glasig-kristalliner poröser silikatischer Granulate müssen die gemischten Ausgangsstoffe zunächst agglomeriert werden. Diese Agglomerierung kann mit Reaktionen oder Vorreaktionen verknüpft werden, die hauptsächlich zwischen Glasmehl, Quarzmehl, Tonbestandteilen, Portlandzement und Natronlauge laufen. Je nach Temperatur, Lagerungs-, Trocknungs- oder Behandlungszeit, Wasserdampfpartialdruck, Stoffaustausch- oder Stofftransportbedingungen sowie zusätzlicher Anfangsverdünnung durch Wasser entstehen dabei zwischen 20°C und 150°C Silikate und Silikathydrate, die die Ausgangsstoffe verkitten und die oberhalb etwa 700°C laufenden Sinter-, Schmelz- und Blähvorgänge beschleunigen und steuern. Die bei den Vorreaktionen im alkalischen Milieu neben der Bildung von Silikaten und Silikathydraten laufende Karbonatbildung wird über den Kohlendioxidpartialdruck im umgebenden Gasraum eingestellt. Es ergeben sich so zusätzliche Steuerungsmöglichkeiten für die späteren Sinter-, Schmelz- und Blähvorgänge. In der Regel wird die Porosität der Sinterprodukte mit zunehmendem Karbonatgehalt des Zwischenproduktes herabgesetzt. Beobachtet wurde ein Einfluß des Karbonatgehaltes auf die Korneigenfestigkeit.

Vorzugsweise wird das benötigte Zwischenprodukt als körniges Agglomerat aus einer als teigig-pastöse Masse eingestellten Mischung hergestellt. Diese Mischung wird zu Blöcken, zu einer Schicht oder zu Strangpreßlingen geformt und bei Temperaturen zwischen 20°C und 150°C mit vorgegebenen Werten oder Verläufen des Kohlendioxid- und des Wasserdampfpartialdruckes solange gelagert, getrocknet oder wärmebehandelt, bis eine ausreichende Grünfestigkeit erhalten ist. Das körnige Zwischenprodukt wird schließlich mit einer anschließenden Zerkleinerung oder Nachzerkleinerung sowie erforderlichenfalls mit der nachgeschalteten autogenen Verrundung in einer Mahltrommel und Klassierung erzeugt.

Die Wärmebehandlung der teigig-pastösen Masse kann vorteilhaft durch Joulesche Wärme über eine Wechselstromleitung vorgenommen werden oder vorteilhaft durch Anwendung von Mikrowellen erfolgen.

Der Prozeß bis zur Herstellung des Zwischenproduktes kann so gestaltet werden, daß die Agglomerierung als Granulierprozeß geführt und gegebenenfalls mit einer Trocknung oder Wärmebehandlung bei Einstellung, Wahl oder zeitlich-temperatur-abhängiger Vorgabe der Kohlendioxid- und der Wasserdampfpartialdrücke verknüpft wird oder daß die Agglomerierung durch Pressen vorgenommen und erforderlichenfalls durch eine Nachzerkleinerung und Klassierung ergänzt wird.

Das Endprodukt als glasig-kristallines poröses silikatisches Granulat wird aus dem körnigen Zwischenprodukt vorzugsweise in einem Drehrohrofenprozeß durch Sintern und Blähen zwischen 700°C und 1250°C unter Zusatz eines Trennmittelgemisches hergestellt. Als Trennmittel kommen neben hochschmelzenden MgO- und CaO-reichen Feinkornmaterialien wie Talkum und Zement Mischungen von Zement und Quarzfeinsand in Betracht.

Die Erfindung soll durch zwei Ausführungsbeispiele erläutert werden. Sie ist nicht auf diese Beispiele beschränkt.

### Ausführungsbeispiel 1

10,2 kg Quarzmehl; 85,0 kg Flachglasmehl; 2,7 kg Portlandzement; 5,4 kg Natronlauge (50%ig); 1,2 kg Puderzucker; 8,0 kg Bentonit und 20,0 kg Wasser werden zu einem teigig-pastösen Gut gemischt und in einem Extruder zu Strangpreßlingen von 6 mm Durchmesser und 10 bis 20 mm Länge geformt.

Die Strangpreßlinge werden unverzüglich in eine Trockeneinrichtung gebracht und 20 h mit eingeschränktem Luftaustausch (also mit gegenüber der Umgebungsluft herabgesetztem Kohlendioxid- und heraufgesetztem Wasserdampfpartialdruck) bei 130°C wärmebehandelt und getrocknet. Die erhaltenen harten Preßlinge werden auf eine Länge von etwa 6 mm nachzerkleinert und in einem indirekt beheizten Drehrohrofen unter Zusatz eines Trennmittelgemisches aus 50 kg geglühtem Portlandzement und 50 kg geglühtem Feinquarzsand und unter Luftatmosphäre in 10 min auf 750°C aufgeheizt, 10 min auf einer Temperatur von 750°C gehalten und anschließend rasch zunächst auf 400°C bis 300°C abgekühlt.

Erhalten wird ein graues geblähtes Granulat mit dichter Oberfläche und Werten für die Rohdichte zwischen 0,28 g/cm³ und 0,31 g/cm³.

### Ausführungsbeispiel 2 (nach Laboratoriumsversuchen)

3400 g Glasmehl; 370 g Quarzmehl; 40 g Großalmeroder Rohtonmehl; 108 g Portlandzement; 217 g Natronlauge (50%ig); 50 g Puderzucker und 1200 g Wasser werden zu einer schlickerigpastösen Masse gemischt.

Die pastöse Masse wird in einen quaderförmigen PTFE-Behälter gebracht. Über zwei an den Schmalseiten des Behälters eingetauchte Edelstahlelektroden wird mit einem Stelltrenntransformator Wechselstrom eingeleitet. Die eingespeiste Leistung liegt zwischen 100 und 200 W. An der gewählten Meßstelle erreichen die Temperaturen 98°C. Durch kleine Öffnungen in der zunächst lederartigen Oberflächenhaut der Masse entweicht Wasserdampf. Nach 2 h sinkt der Strom auf Null, der praktisch ohne Zutritt von Kohlendioxid und bei hohem Wasserdampfpartialdruck durchgeführte Wärmebehandlungsvorgang ist abgeschlossen.

Nach dem Abkühlen wird die Masse als äußerlich trockener fester Block ausgeformt. Der Block wird gebrochen und dabei in der Hauptmenge auf ein Bruchkorn von 5 mm bis 8 mm zerkleinert. Bei 150°C hat dieses Material einen Trockenverlust von 18,2 %, bei 900°C einen den Trockenverlust einschließenden Glühverlust von 21,4 %.

Unter Bedingungen, die einem Drehrohrofenprozeß nahekommen, wird das Bruchgut mit Zement als Trennmittel unter Luftatmosphäre in 10 min auf 800°C aufgeheizt, 10 min auf einer Temperatur von 800°C gehalten und anschließend rasch zunächst auf 400°C bis 300°C abgekühlt.

Erhalten wird ein dunkelgraues geblähtes Granulat mit dichter Oberfläche und Werten für die Rohdichte von 0,23 g/cm³.

## Patentansprüche

1. Verfahren zur Herstellung von porösem silikatischen Granulat, insbesondere als Zuschlagstoff für die Herstellung von Baustoffen wie Leichtbeton, Mörtel oder Wärmedämmputzen, enthaltend Glas und einen glasig-kristallinen Anteil aus
45 bis 85 Gew.-% SiO₂,
5 bis 20 Gew.-% Alkalioxide,
5 bis 30 Gew.-% Erdalkalioxide und
2 bis 30 Gew.-% anderen Oxiden wie Al₂O₃ und/oder Fe₂O₃,
wobei der glasig-kristalline Anteil 5 bis 75 Gew.-% des Granulates ausmacht,
**dadurch gekennzeichnet, daß**
- eine Mischung aus
a) Glasmehl,
b) Quarzmehl und/oder einem anderen im wesentlichen reinen feinkörnigen SiO₂-Träger,
c) einem Tonmehl und/oder Tonmineralmehl,
d) Portlandzement,
e) Natronlauge,
f) einem Blähmittel und
g) Wasser
sowie gegebenenfalls weiteren Zusatz- und/oder Hilfsstoffen hergestellt wird,
- die Mischung bei einer erhöhten Temperatur im Bereich von 20°C bis 150°C bei Normaldruck unter Einstellung oder zeitlich-temperatur-abhängiger Steuerung des Wasserdampfpartialdruckes und entweder unter Ausschluß von Kohlendioxid oder unter gegenüber der Umgebungsluft herabgesetztem Kohlendioxidpartialdruck wärmebehandelt und agglomeriert wird, wobei bei gegenüber der Umgebungsluft herabgesetztem Kohlendioxidpartialdruck der Zutritt von Kohlendioxid durch Einstellung oder Wahl des Kohlendioxidpartialdruckes gesteuert wird,
- das Zwischenprodukt gegebenenfalls zerkleinert und klassiert wird,
- das so erhaltene Zwischenprodukt bei Normaldruck und unter Einstellung, Wahl oder zeitlich-temperatur-abhängiger Steuerung des Kohlendioxidpartialdruckes und/oder des Wasserdampfpartialdruckes auf eine Temperatur von 700°C bis 1250°C aufgeheizt und bei dieser Temperatur gesintert und gebläht wird.

2. Verfahren nach Anspruch 1,
**dadurch gekennzeichnet, daß** die Mischung nach dem Agglomerieren zwischengelagert und anschließend getrocknet und/oder wärmebehandelt wird.

3. Verfahren nach Anspruch 2,
**dadurch gekennzeichnet, daß** das Zwischenlagern, Trocknen und/oder Wärmebehandeln unter Ausschluß oder unter Zutritt von Kohlendioxid erfolgt, wobei der Zutritt von Kohlendioxid durch Einstellung oder Wahl des Kohlendioxidpartialdruckes gesteuert wird.

4. Verfahren nach Anspruch 2 oder 3,
**dadurch gekennzeichnet, daß** das Zwischenlagern, Trocknen und/oder Wärmebehandeln unter Einstellung, Wahl oder zeitlich-temperatur-abhängiger Steuerung des Wasserdampfpartialdruckes erfolgt.

5. Verfahren nach einem der Ansprüche 1 bis 4,
**dadurch gekennzeichnet, daß** Glasmehl, Quarzmehl und/oder ein anderer im wesentlichen reiner feinkörniger SiO₂-Träger mit einer Körnung < 40 µm eingesetzt wird.

6. Verfahren nach einem der Ansprüche 1 bis 5,
**dadurch gekennzeichnet, daß** bei der Herstellung der Mischung silikatische, oxidische, hydrooxidische, karbonatische und/oder sulfatische Materialien als Zusatz- und/oder Hilfsstoffe beigemischt werden.

7. Verfahren nach einem der Ansprüche 1 bis 6,
**dadurch gekennzeichnet, daß** bei der Herstellung der Mischung Wasserglaslösungen, Filterstäube, Schlackenmehle, Keramikmehle, Branntkalk, Kalkhydrat, Kalksteinmehl, Gips, Anhydrid, Korundmehl, Tonerdehydrat und/oder Oxide, Hydroxide, Karbonate und Sulfate der Alkalien und Erdalkalien beigemischt werden.

8. Verfahren nach einem der Ansprüche 1 bis 7, **dadurch gekennzeichnet, daß** ein aus Zusatz- und/oder Hilfsstoffen stammender Masseanteil des Granulats als Endprodukt maximal 20 Gew.-% beträgt.

9. Verfahren nach einem der Ansprüche 1 bis 8,
**dadurch gekennzeichnet, daß** als Blähmittel Kohlenstoff und/oder ein Kohlenstoffträger wie Ruß, Graphitmehl, Steinkohlenmehl, feinkörniges Siliziumkarbid und Kohlenhydrate eingesetzt werden.

10. Verfahren nach Anspruch 1,
**dadurch gekennzeichnet, daß** die Mischung als teigig-pastöse Masse eingestellt wird.

11. Verfahren nach Anspruch 1,
**dadurch gekennzeichnet, daß** die Wärmebehandlung durch Joulesche Wärme über eine Wechselstromeinleitung vorgenommen wird oder durch Einleitung von Mikrowellen erfolgt.

12. Verfahren nach einem der Ansprüche 1 bis 11,
**dadurch gekennzeichnet, daß** das Agglomerieren mittels eines Granulierprozesses durchgeführt wird und/oder durch Pressen erfolgt.

13. Verfahren nach einem der Ansprüche 1 bis 12,
**dadurch gekennzeichnet, daß** das Sintern und Blähen in einem Drehrohrofen unter Zusatz eines Trennmittels erfolgt.

## Claims

1. A method for the producing of a porous silicate granulate, in particular as an aggregate for the production of construction materials such as lightweight concrete, mortar or heat-insulating plaster, containing glass and a glassy-crystalline component comprising
45 to 85 wt.% SiO₂,
5 to 20 wt.% alkali oxide,
5 to 30 wt.% alkaline earth oxide and
2 to 30 wt.% of other oxides like Al₂O₃ and/or Fe₂O₃, whereby the glassy crystalline component accounts for 5 to 75 wt.% of the granulate,
**characterised in that**
- a mixture of
a) powdered glass,
b) quartz powder and/or another essentially pure fine-grained SiO₂ carrier,
c) powdered clay and/or powdered clay mineral,
d) Portland cement,
e) sodium hydroxide in hydrous solution,
f) an expanding agent and
g) water
and, if necessary, further additives and/or auxiliary agents is prepared,
- the mixture is heat treated and agglomerated at an elevated temperature in a range of 20°C to 150°C at normal pressure with the water vapour partial pressure being adjusted or controlled as a function of time and temperature and either with carbon dioxide being excluded or with reduced carbon dioxide partial pressure compared with the surrounding air, wherein in the case of reduced carbon dioxide partial pressure compared with the surrounding air the admission of carbon dioxide is controlled by adjusting or selecting the carbon dioxide partial pressure,
- the intermediate product is optionally crushed and graded,
- the intermediate product thus obtained is heated at normal pressure and with the carbon dioxide partial pressure and/or the water vapour partial pressure being adjusted, selected or controlled as a function of time and temperature to a temperature of 700°C to 1250°C and sintered and expanded at this temperature.

2. The method according to Claim 1,
**characterised in that** after agglomeration the mixture is put into intermediate storage and then dried and/or heat treated.

3. The method according to Claim 2,
**characterised in that** the intermediate storage, drying and/or heat treatment takes place with carbon dioxide being excluded or admitted, wherein the admission of carbon dioxide is controlled by adjusting or selecting the carbon dioxide partial pressure.

4. The method according to Claim 2 or 3,
**characterised in that** the intermediate storage, drying and/or heat treatment takes place with the water vapour partial pressure being adjusted, selected or controlled as a function of time and temperature.

5. The method according to any of Claims 1 to 4,
**characterised in that** powdered glass, quartz powder and/or another essentially pure fine-grained SiO₂ carrier having a grain size of < 40 µm is used.

6. The method according to any of Claims 1 to 5,
**characterised in that** during preparation of the mixture silicate, oxide, hydroxide, carbonate and/or sulphate materials are added as additives and/or auxiliary agents.

7. The method according to any of Claims 1 to 6,
**characterised in that** during preparation of the mixture water glass solutions, filter dust, ground slag, powdered ceramic, quicklime, hydrated lime, powdered limestone, gypsum, anhydride, powdered corundum, aluminium hydrate and/or oxides, hydroxides, carbonates and sulphates of alkalis and alkaline earths are added.

8. The method according to any of Claims 1 to 7,
**characterised in that** a mass fraction of the granulate as end product originating from additives and/or auxiliary agents is a maximum of 20 wt.%.

9. The method according to any of Claims 1 to 8,
**characterised in that** carbon and/or carbon carriers including soot, powdered graphite, powdered hard coal, fine-grained silicon carbide and carbohydrate are used as swelling agents. coal, fine-grained silicon carbide and carbohydrate are used as swelling agents.

10. The method according to Claim 1,
**characterised in that** the mixture is adjusted as a doughy pasty mass.

11. The method according to Claim 1,
**characterised in that** the heat treatment is provided by Joule heat via an ac power supply or by supplying microwaves.

12. The method according to any of Claims 1 to 11,
**characterised in that** the agglomeration is accomplished by a granulation process or takes place by pressing.

13. The method according to any of Claims 1 to 12,
**characterised in that** the sintering and expanding takes place in a rotary kiln with the addition of a parting compound.

## Revendications

1. Procédé pour la préparation de granulat poreux à base de silicates, en particulier comme adjuvant pour la préparation de matériaux de construction tels que béton léger, mortier ou crépi thermiquement isolant, contenant du verre ainsi qu'une fraction de structure cristalline vitreuse composée de
45 à 85 % en poids de SiO₂,
5 à 20 % en poids d'oxydes alcalins,
5 à 30 % en poids d'oxydes alcalino-terreux et
de 2 à 30 % en poids d'autres oxydes tels que Al₂O₃ et/ou Fe₂O₃,
la fraction de structure cristalline vitreuse constituant de 5 à 75 en poids du granulat,
**caractérisé:**
- **en ce qu'**on prépare un mélange composé :
a) de poudre de verre,
b) de poudre de quartz et/ou d'un autre composé porteur de SiO₂ à grains fins et pratiquement pur,
c) d'une poudre d'argile et/ou d'une poudre minérale d'argile,
d) de ciment Portland,
e) de lessive de soude,
f) d'un agent de gonflement et
g) d'eau
ainsi qu'éventuellement d'autres additifs et/ou produits auxiliaires,
- **en ce que** le mélange est soumis à un traitement thermique et aggloméré à une température accrue située dans le domaine allant de 20°C à 150°C, à pression normale avec ajustement ou pilotage selon une variation de température en fonction du temps, de la pression partielle de vapeur d'eau, ainsi que soit avec l'exclusion de dioxyde de carbone, soit avec une pression partielle de dioxyde de carbone réduite par rapport à l'air environnant, en ce sens que dans le cas d'une pression partielle de dioxyde de carbone réduite par rapport à l'air environnant, l'admission de dioxyde de carbone est pilotée ou commandée par ajustement ou sélection de la pression partielle de dioxyde de carbone,
- **en ce que** le produit intermédiaire est éventuellement réduit en poudre et classifié,
- et **en ce que** le produit intermédiaire ainsi obtenu est chauffé à une température de 700°C à 1250°C, à pression normale avec ajustement, sélection ou pilotage selon une variation de température en fonction du temps, de la pression partielle de dioxyde de carbone et/ou de la pression partielle de vapeur d'eau, ledit produit intermédiaire étant fritté et soumis à un gonflement à cette température.

2. Procédé selon la revendication 1,
**caractérisé en ce que** le mélange est, après son agglomération, soumis à un stockage intermédiaire, puis séché et/ou traité thermiquement.

3. Procédé selon la revendication 2,
**caractérisé en ce que** le stockage intermédiaire, le séchage et/ou le traitement thermique s'effectue(nt) sous l'exclusion ou sous admission de dioxyde de carbone, l'admission de dioxyde de carbone étant commandée par ajustement ou par sélection de la pression partielle de dioxyde de carbone.

4. Procédé selon la revendication 2 ou 3,
**caractérisé en ce que** le stockage intermédiaire, le séchage et/ou le traitement thermique s'effectue(nt) par ajustement, par sélection ou par pilotage de la pression partielle de dioxyde de carbone

5. Procédé selon l'une des revendications 1 à 4,
**caractérisé en ce qu'**on emploie de la poudre de verre, de la poudre de quartz et/ou un autre composé porteur de SiO₂, substantiellement pur et à grains fins, avec une granulométrie < 40 µm.

6. Procédé selon l'une des revendications 1 à 5,
**caractérisé en ce que** lors de la préparation du mélange on y mélange en tant que produits d'addition ou auxiliaires, des matériaux à base de silicates, d'oxydes, d'hydroxydes, de carbonates et/ou de sulfates.

7. Procédé selon l'une des revendications 1 à 6,
**caractérisé en ce que** lors de la préparation du mélange, on y mélange conjointement des solutions de silicate alcalin, des poussières de filtration, des poudres de scories, des poudres céramiques, de la chaux, de l'hydrate de chaux, du calcaire en poudre, du gypse, de l'anhydrite, de la poudre de corindon, de l'hydroxyde d'alumine et/ou des oxydes, des hydroxydes, des carbonates et des sulfates des métaux alcalins et alcalino-terreux.

8. Procédé selon l'une des revendications 1 à 7,
**caractérisé en ce qu'**une fraction massique du granulat final, issue de produits d'addition et/ou de produits auxiliaires s'élève au maximum à 20 % en poids.

9. Procédé selon l'une des revendications 1 à 8,
**caractérisé en ce qu'**en tant qu'agent de gonflement, on emploie le carbone et/ou un composé porteur de carbone, tel que la suie, la poudre de graphite, la poudre de houille, du carbure de silicium à grains fins et des hydrates de carbone.

10. Procédé selon la revendication 1,
**caractérisé en ce que** le mélange est employé en tant que masse plâtro-pâteuse.

11. Procédé selon la revendication 1,
en ce que le traitement thermique s'effectue par effet Joule par le biais d'une application d'un courant alternatif ou par application de micro-ondes.

12. Procédé selon l'une des revendications 1 à 11,
**caractérisé en ce que** l'étape d'agglomération est réalisée au moyen d'un processus de granulation et/ou s'effectue à la presse.

13. Procédé selon l'une des revendications 1 à 12,
**caractérisé en ce que** le frittage et le gonflement s'effectuent dans un four à sole tournante avec addition d'un produit de séparation.
